# NEUE EUROPÄISCHE PATENTSCHRIFT

(11) **EP 0 682 395 B2**
(45) Veröffentlichungstag und Bekanntmachung des Hinweises auf die Entscheidung über den Einspruch: **28.01.2009**
(45) Hinweis auf die Patenterteilung: 02.01.2003
(21) Anmeldenummer: 95106490.6
(22) Anmeldetag: 28.04.1995
(51) Int. Cl.: H02H 7/122, H02H 9/00, H01F 37/00, H02M 1/12

(54) **Einrichtung zur Begrenzung der Aenderungsgeschwindigkeit von Strömen und Spannungen zwischen Leitungen oder gegenüber dem Erdpotential und Verwendung derselben**
Device for limiting the rate of change of currents and voltages between conductors or to earth and use thereof
Dispositif pour limitation de la vitesse de changement des courants et tensions entre conducteurs ou vers la terre et procédé l'utilisant

(30) Priorität: 11.05.1994 CH 146494
(43) Veröffentlichungstag der Anmeldung: 15.11.1995
(73) Patentinhaber: SCHAFFNER EMV AG, 4542 Luterbach (CH)
(72) Erfinder: Süsse, Heinz, D-59581 Warstein (DE); Stitz, Ullrich, D-59581 Warstein (DE)
(74) Vertreter: P&TS Patents & Technology Surveys SA

(56) Entgegenhaltungen:
- EP-A- 0 579 962
- DE-A- 2 600 765
- DE-A- 3 445 879
- DE-A- 4 135 680
- GB-A- 1 322 433
- 'Funk-Entstörung Datenbuch 1968/69', 1968, SIEMENS AG, DE Seiten 91,92, - 106

## Beschreibung

Die vorliegende Erfindung liegt auf dem Gebiet der Leistungselektronik für die Antriebstechnik, insbesondere auf dem Gebiet der Umrichter und der Netzfilter für elektromagnetische Verträglichkeit.

In weiten Bereichen der Antriebstechnik werden Gleichspannungen über Leistungshalbleiter geschaltet, wobei stets darauf geachtet wird, die Schaltzeiten, also die Anstiegs und Abfallzeiten der Spannungsimpulse, möglichst gering zu halten. Denn in der Übergangszeit der Leistungshalbleiter vom leitenden in den nichtleitenden Zustand und umgekehrt entstehen Verluste, die sich als Wärme auswirken und den Leistungshalbleiter belasten können. Aus dieser Arbeitsweise ergeben sich zeitlich sehr steile Potentialsprünge zwischen den spannungsführenden Leitungen und gegenüber dem Erdpotential. Dies führt dazu, dass den Leistungshalbleitern nachgeschaltete Bauelemente oder Geräte in ihrer Basisisolation so stark beeinflusst werden können, dass es zu Ausfällen kommt. Ausserdem werden durch die steilen Anstiegsflanken gegenüber dem Erdpotential durch parasitär vorhandene Kapazitäten Ströme hervorgerufen, die zur Beeinflussung benachbarter Baugruppen führen können.

Die Erfindung betrifft eine Einrichtung zur Begrenzung der Änderungsgeschwindigkeit von Strömen und Spannungen zwischen den spannungsführenden Leitungen und gegenüber dem Erdpotential für Umrichter in der Antriebstechnik oder als Netzfilter für elektromagnetische Verträglichkeit, mit einem Kapazitäten und Induktivitäten aufweisenden LC-Tiefpass, wobei alle Induktivitäten zu einem gemeinsamen Bauteil zusammengefasst sind, welches so ausgebildet ist, dass es funktionsmässig einer Reihenschaltung einer stromkompensierten Drossel mit mehreren als Längsinduktivitäten wirkenden Drosseln entspricht.

Bei einer aus der DE-A-41 35 680 bekannten Einrichtung zur Begrenzung der Ändemngsgeschwindigkeiten von Ausgangsgrössen dreiphasiger selbstgeführter Wechselrichter enthält der Tiefpass als Induktivitäten sogenannte Stromanstiegbegrenzungsdrosseln, deren Zweige mit je zwei Dioden nachgeschaltet sind. Diese bekannte Einrichtung wirkt auf die sogenannten symmetrischen Spannungen, das sind die Spannungen zwischen den spannungsführenden Leitungen, und kann daher die Beanspruchung der Isolation der an den Umricher angeschlossenen Drehfeldmaschinen durch steile Spannungsimpulse und auch die Beanspruchung der Leistungshalbleiter durch die Verbindungskabel merklich reduzieren. Die unsymmetrischen Spannungen gegenüber dem Erdpotential und die durch diese verursachten Störungen bleiben hingegen weitestgehend unbeeinflusst.

Bei einer in der EP-A-0 579 962 beschriebenen Drossel sind alle Induktivitäten zu einem gemeinsamen Bauteil zusammengefasst, welches funktionsfähig einer Reihenschaltung einer stromkompensierten Drossel mit mehreren als Längsinduktivitäten wirkenden Drosseln entspricht. Das gemeinsame Bauteil enthält einen zweiteiligen Kern aus unterschiedlichen Materialien, wobei in dem einen Kernteil ein schmaler Luftspalt vorgesehen ist. Aufgrund dieses Aufbaus kommt der Kern relativ in die Sättigung, so dass die Drossel nur kleine Störspannungen verarbeiten kann.

DE-A1-2600765 beschreibt eine Siebdrossel zur Minderung von Störspannungen in Stromversorgungen mit einem dreischenkligen Kern, in welchem ein schmaler Luftspalt vorgesehen ist, und zwei auf diesem Kern angeordnete Wicklungen. Der magnetische Fluss, der durch zwischen Speiseleitungen existierende Störspannungen erzeugt wird, verläuft durch den mittleren Schenkel mit dem Luftspalt. Störspannungen zwischen Speiseleitung und Erde erzeugen dagegen einen magnetischen Fluss, der nur durch die beiden Aussenschenkel verläuft. Diese Anordnung verlangt einen eher voluminösen dreischenkligen Drosselkern.

Das Datenbuch "Funkentstörung" 1968-1969 der Siemens AG, Seiten 91, 92, 106, 107, beschreibt einen Stabkerndrossel mit mehreren räumlich getrennten Wicklungen.

Durch die Erfindung soll nun eine Einrichtung der genannten Art angegeben werden, die sowohl auf symmetrische als auch auf unsymmetrische Störspannungen wirkt, und die aus möglichst wenigen Bauelementen besteht und daher einfach und kostengünstig zu fabrizieren und zu montieren ist.

Die erfindungsgemässe Lösung dieser Aufgabe ist durch die Merkmale des Anspruchs 1 gekennzeichnet. Das gemeinsame Bauteil ist einfach und kostengünstig herstell- und montierbar und es wirkt auf symmetrische und auf unsymmetrische Störspannungen. Ausserdem ist es durch den gewählten Aufbau sehr sättigungsfest und somit für höhere unsymmetrische Ströme besonders geeignet.

Im folgenden wird die Erfindung anhand von Ausführungsbeispielen und der Zeichnungen näher erläutert; dabei zeigt:
- Fig. 1: eine Einrichtung zur Begrenzung der Änderungsgeschwindigkeit der Ausgangsspannung bei selbstgeführten Umrichtern mit einem Tiefpass und einer stromkompensierten Drossel;
- Fig. 2: die Einrichtung von Fig. 1 als Netzfilter im Netzeingang eines elektronischen Geräts; und
- Fig. 3 - 6: je ein Beispiel für die Zusammenfassung der Drosseln der Einrichtung von Fig. 1 oder 2 zu einem einzigen Bauteil, wobei Beispiele der Erfindung auf den Figuren 5 und 6 gezeigt werden.

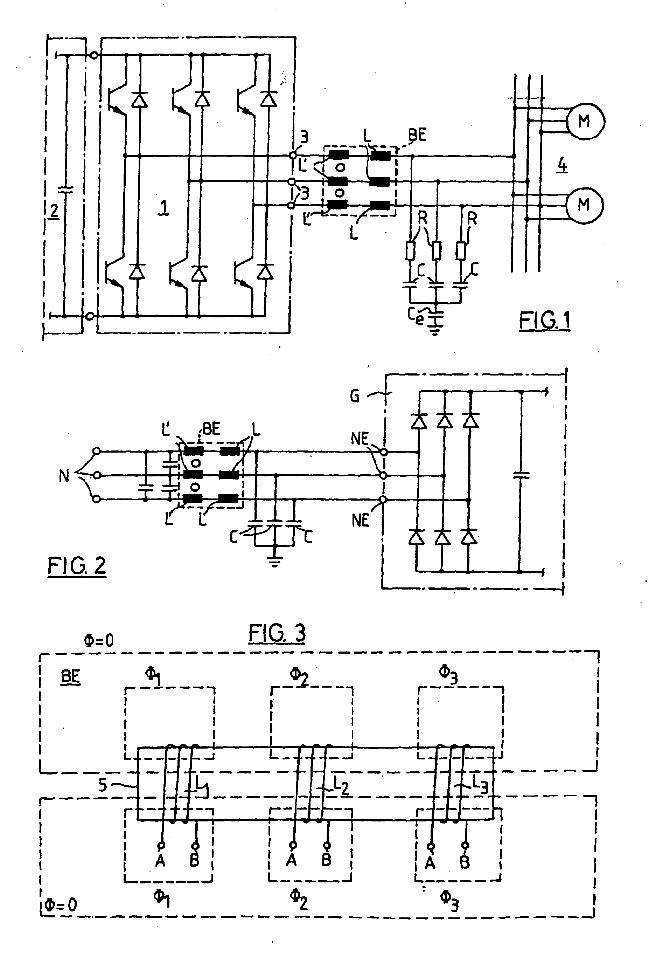

Fig. 1 zeigt einen zur Drehzahlregelung von Drehfeldmaschinen vorgesehenen Wechselrichter oder Frequenzumrichter 1, der an einen durch einen Kondensator symbolisierten Gleichspannungs-Zwischenkreis 2 angeschlossen ist. Dieser ist durch einen an das Versorgungsnetz mit üblicherweise konstanter Spannung und konstanter Frequenz angeschlossenen Netzgleichrichter (nicht dargestellt) gespeist. Der Umrichter 1 schaltet die Gleichspannung des Gleichspannungs-Zwischenkreises 2 mittels Leistungshalbleiterschaltern und stellt an seinen Ausgangsklemmen 3 für die angeschlossenen Drehfeldmaschinen 4 (z.B. Motoren M) das gewünschte dreiphasige Drehstromnetz mit veränderlicher Frequenz und Spannung bereit. Dabei bezeichnet in der vorliegenden Beschreibung der Ausdruck Drehfeldmaschine oder Drehfeldmaschinen jeweils sowohl eine einzelne Maschine als auch eine Gruppe von mehreren Maschinen, insbesondere einen einzelnen Motor oder ein Ensemble von Motoren.

Als Leistungshalbleiterschalter werden beispielsweise FET's oder IGBT's verwendet, die sehr schnell und mit sehr steilen Anstiegsflanken der Impulse arbeiten. Dadurch werden zwar die Verluste im Umrichter 1 möglichst gering gehalten, so dass mit einem sehr hohen Wirkungsgrad gearbeitet werden kann, es ergeben sich aber folgende Probleme: Unzulässig hohe Beanspruchung der Isolation der angeschlossenen Drehfeldmaschinen durch sehr steile Spannungsimpulse und durch Überspannungen bei längeren Anschlusskabeln, unzulässige Funktionsbeeinträchtigung benachbarter Baugruppen oder von zum Verbindungskabel zwischen Umrichter und Drehmaschinen parallel geführten Kabeln sowie unzulässige Beanspruchung der Leistungshalbleiter im Umrichter durch die ausgangsseitig angeschlossenen Leitungen zu den Drehfeldmaschinen.

Einige dieser Probleme, und zwar diejenigen, die mit den (symmetrischen) Spannungen zwischen spannungsführenden Leitungen zu tun haben, das ist die Beanspruchung der Isolation der Drehfeldmaschinen durch steile Spannungsimpulse und die Beanspruchung der Leistungshalbleiter durch die Verbindungskabel, werden durch das Einfügen eines verlustbehafteten LC-Tiefpasses mit Induktivitäten L, Kapazitäten C und Widerständen R in das Verbindungskabel zwischen den Ausgangsklemmen 3 des Umrichters 1 und den Drehfeldmaschinen 4 eliminiert. Dabei können die Kapazitäten C sowohl in Y- als auch in Δ-Form geschaltet sein.

Die durch Potentialsprünge am Ausgang des Umrichters 1 erzeugten unsymmetrischen Spannungen gegenüber dem Erdpotential und die durch diese verursachten Probleme werden dadurch beseitigt, dass zwischen jede Ausgangsklemme 3 und die Drehfeldmaschine 4 eine zusätzliche Induktivität in Form einer stromkompensierten Drossel L' eingefügt wird. Zusätzlich kann noch, insbesondere bei kürzeren Verbindungsleitungen zwischen Umrichter 1 und Drehfeldmaschine 4, der Sternpunkt, zu dem die Kondensatoren C zusammengeführt sind, über eine weitere Kapazität Cₑ mit dem Erdpotential verbunden sein. Durch diese Schaltung werden die unsymmetrischen Spannungen gegenüber dem Erdpotential weitestgehend reduziert.

Stromkompensierte Drosseln sind so ausgebildet, dass bei normalem Betriebsstrom (Motorstrom) die im Kern erzeugten magnetischen Flüsse sich gegenseitig aufheben und die Induktivitäten praktisch wirkungslos sind. Fliessen jedoch unsymmetrische Ströme gegenüber Erdpotential ab oder an den Gleichspannungs-Zwischenkreis 2 zurück, so ist die Summe der gesamten Ströme ungleich, und die magnetischen Flüsse heben sich nicht mehr auf. Ein besonderer Vorteil dieser stromkompensierten Drosseln liegt darin, dass bei relativ kleinem Bauvolumen hohe Induktivitätswerte erreicht werden können, wobei selbstverständlich die Grösse der Induktivität auf die auftretenden unsymmetrischen Ströme ausgelegt sein muss. Da diese stromkompensierten Drosseln für den normalen Betriebsstrom nur vernachlässigbar geringe Spannungsabfälle erzeugen, kann durch geeignete Dimensionierung des jeweiligen Tiefpasses eine für alle aufgezählten nachteiligen Probleme wirksame kompakte Einrichtung erstellt werden.

Die in Fig. 1 dargestellte Einrichtung kann auch bei selbsterregten oder fremderregten Synchronmaschinen eingesetzt, oder sie kann, wie in Fig. 2 gezeigt ist, auch als Netzfilter für elektromagnetische Verträglichkeit verwendet werden. Darstellungsgemäss ist die aus dem LC-Tiefpass und der stromkompensierten Drossel L' gebildete Baugruppe zwischen das Netz N und den Netzeingang NE eines elektronischen Geräts G eingesetzt. Bei dieser Applikation sind zwar die Anforderungen bezüglich der Spannungsamplituden geringer als bei der Einrichtung von Fig. 1, die geschilderten Probleme sind aber grundsätzlich die gleichen.

Die in den Fig. 1 und 2 dargestellte Einrichtung hat sich zwar zur Lösung der gestellten Aufgabe bestens bewährt, sie ist aber insofern nicht ganz optimal, als sie aus mehreren Bauelementen besteht, was im Hinblick auf Herstellungs- und Unterhaltskosten einen gewissen Nachteil bedeuten könnte. In den Fig. 3 bis 6 sind Ausführungsbeispiele für eine drastische Reduktion der Anzahl der Bauelemente dargestellt, wobei diese Reduktion dadurch erfolgt, dass alle Drosseln zu einem einzigen, gemeinsamen, in den Fig. 1 und 2 gestrichelt eingezeichneten, Bauteil BE zusammengefasst werden.

Gemäss Fig. 3 sind auf einem Stab 5 aus magnetischem Material drei Wicklungen L₁, L₂ und L₃ angeordnet, deren Windungszahl an die konkreten Anforderungen der jeweiligen Applikation angepasst sind. Unabhängig von der Windungszahl gilt, dass die Wicklungen mehrlagig möglichst schmal übereinander gewickelt werden und dass sie räumlich voneinander getrennt sind. Die Wahl des magnetischen Materials für den Stab 5 richtet sich nach den Arbeitsfrequenzen der Umrichter. Für Frequenzumrichter können beispielsweise sowohl geschachtelte Eisenbleche als auch Eisenpulver oder Ferritwerkstoffe verwendet werden.

In der Figur sind die Wicklungsanfänge der Wicklungen L₁ bis L₃ jeweils als Klemme A und die Ausgangssperren als Klemme B bezeichnet. Wenn man die Klemmen A aller drei Wicklungen L₁ bis L₃ mit den Ausgangsklemmen 3 des Umrichters 1 (Fig. 1) und die Klemmen B mit dem Verbindungskabel vom Umrichter 1 zu den Drehfeldmaschinen 4 verbindet, so wirkt die in Fig. 3 dargestellte und nachfolgend als Mehrfachdrossel bezeichnete Baueinheit BE auf symmetrische und auf unsymmetrische Störspannungen ebensogut wie die Einrichtung von Fig. 1.

Wenn die in der beschriebenen Art kontaktierten Wicklungen L₁ bis L₃ vom Betriebsstrom (Motorstrom) eines dreiphasigen, geschlossenen Drehstromnetzes gespeist werden, dann ist die Summe aller Ströme gleich null und für die Summe Φ der durch die Einzelströme hervorgerufenen magnetischen Flüsse gilt ebenfalls Φ=0. Wegen des bewusst gewählten Aufbaus der Mehrfachdrossel BE mit schmalen, mehrlagigen Wicklungen und räumlicher Trennung von diesen, gilt diese Überlegung aber nur theoretisch. Denn durch den genannten Aufbau ergeben sich Streuflüsse Φ₁ bis Φ₃, so dass sich die Gesamtflüsse im geschlossenen System nicht mehr voll aufheben. Diese Streuflüsse führen zu Streuinduktivitäten, die in den hier in Betracht kommenden Fällen als sogenannte Längsinduktivitäten wirksam sind und in dieser Funktion steile Stromanstiege, also sehr kurze Stromanstiegszeiten, und Potentialsprünge zwischen den spannungsführenden Leitungen begrenzen.

Wenn durch vorhandene Kabelkapazitäten oder Wicklungskapazitäten des Antriebs Ströme gegenüber dem Erdpotential abfliessen, dann ist die Summe der Betriebsströme ungleich null, so dass sich die magnetischen Flüsse der Einzelströme nicht mehr aufheben und die eigentliche Induktivität der Drossel voll wirksam werden kann. Und diese Eigenschaft entspricht der Funktion einer stromkompensierten Drossel. Somit können mit der in Fig. 3 dargestellten Mehrfachdrossel BE sowohl Potentialsprünge zwischen den Leitungen als auch gegenüber dem Erdpotential begrenzt werden. Und das bedeutet mit anderen Worten, dass die in Fig. 3 dargestellte Mehrfachdrossel BE eine stromkompensierte Drossel und drei symmetrische, als Längsinduktivität wirkende Drosseln enthält, die zu einem einzigen Bauelement zusammengefasst sind. Dieses hat den weiteren Vorteil, dass die Drossel durch den vorgegebenen grossen Luftspalt sehr sättigungsfest gegenüber grossen Strömen ist. Dieser Vorteil kommt insbesondere der Antriebstechnik entgegen, da hier aufgrund von Laständerungen kurzfristig grosse Ströme auftreten können.

Man kann die Wicklungen der in Fig. 3 dargestellten Mehrfachdrossel auch anders kontaktieren und beispielsweise die Anschlüsse A und B der Wicklung L₂ vertauschen, so dass der Anschluss B mit der Ausgangsklemme 3 des Umrichters 1 und der Anschluss A mit dem Verbindungskabel zu den Drehfeldmaschinen 4 (Fig. 1) verbunden ist. Bei dieser Kontaktierung wirkt dann für die Leitungsstränge L₁-L₂ und L₂-L₃ jeweils die Induktivität, die sich aus der Reihenschaltung der beiden jeweiligen Wicklungen L₁ und L₂ bzw. L₂ und L₃ ergibt, und für den Leitungsstrang L₁-L₃ ist dann nur die Streuinduktivität wirksam. Wegen des grossen räumlichen Abstands zwischen den beiden Wicklungen L₁ und L₃ ist der Wert dieser Streuinduktivität relativ gross, und die Streuinduktivität wirkt als Längsinduktivität und begrenzt kurze Stromanstiegszeiten und Potentialsprünge zwischen den spannungsführenden Leitungen. In Einzelfällen kann diese Lösung zufriedenstellende Ergebnisse liefern.

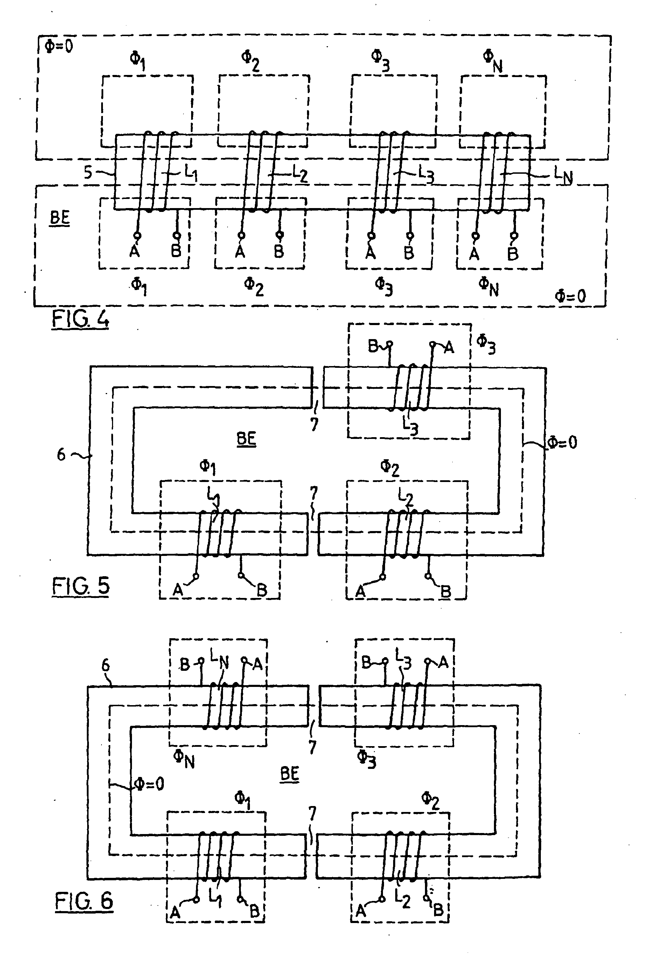

Bei der in Fig. 4 dargestellten Variante ist die Einrichtung für den Einsatz in Vierleiternetzen mit drei Phasen und einem gemeinsamen Neutralleiter um eine zusätzliche Wicklung L_{N} erweitert. Die mit dieser Mehrfachdrossel BE erzielbaren Ergebnisse sind die gleichen, wie sie schon anhand von Fig.3 beschrieben sind. Analog zur Mehrfachdrossel von Fig. 3 kann man auch beim Aufbau von Fig. 4 durch Vertauschen von Anschlüssen, beispielsweise der Anschlüsse der Wicklung L_{N}, eine befriedigende Lösung erzielen.

In Figur 5 und 6 sind zwei Beispiele der Erfindung dargestellt, wobei Fig 5 eine Mehrfachdrossel BE für Dreileiter- und Fig. 6 eine solche für Vierleiterbetrieb zeigt. Im Unterschied zu den in den Figuren 3 und 4 dargestellten Ausführungsbeispielen sind hier die einzelnen Wicklungen L₁, L₂ und L₃ (Fig. 5) bzw. L₁, L₂, L₃ und L_{N} (Fig. 6) nicht auf einem stabförmigen sondern auf einem rechteckförmigen Kern 6 angeordnet, der durch zwei Luftspalte 7 in zwei U-förmige, einander zugekehrte Hälften geteilt ist. Diese Anordnung hat den Vorteil, dass sich durch den weitgehend geschlossenen magnetischen Kreis mit dem verbleibenden Restluftspalt wesentlich höhere Induktivitätswerte erzeugen lassen.

## Patentansprüche

1. Drei-Phasen-Filtereinrichtung zur Begrenzung der Änderungsgeschwindigkeit von Strömen und Spannungen zwischen den drei spannungsführenden Phasenleitungen und gegenüber dem Erdpotential für Umrichter In der Antriebstechnik oder als Netzfilter für elektromagnetische Verträglichkeit, mit einem Kapazitäten und Induktivitäten aufweisenden LC-Tiefpass, wobei alle Induktivitäten zu einem gemeinsamen Bauteil (BE) zusammengefasst sind, welches so ausgebildet ist, dass es funktionsmässig einer Reihenschaltung einer stromkompensierten Drossel (L') mit je einer In Jeder spannungsführenden Phasenleitung angeordneten, als Längsinduktivitäten wirkenden Drossel (L) entspricht, wobei das gemeinsame Bauteil (BE) einen Kern (6) aus magnetischem Material mit einer grossen Luftspalte (7) und mindestens drei auf diesem Kern angeordnete mehrlagige Wicklungen (L₁, L₂, L₃, L_{N}) aufweist,
wobei die Wicklungen räumlich getrennt und so auf dem Kern angeordnet sind, dass sich Streuflüsse ergeben, welche zu Streuinduktivitäten führen, welche ihrerseits als Längsinduktivitäten wirksam sind,
wobei ein Teil (Ø) der magnetischen Flüsse von jeder der benannten mindestens drei Wicklungen durch den benannten Kern (6) und die benannte Luftspalte (7) fliessen und sich gegenseitig aufheben, so dass das benannte Bauteil auch als stromkompensierte Drossel wirksam ist,
die Wicklungsanfänge (A) und die Ausgangsklemmen (B) aller Wicklungen (L₁, L₂, L₃, L_{N}) je mit der gleichen Art von Anschlüssen (3, N bzw. 4, NE) verbunden sind,
wobei der Kern (6) rechteckförmig ausgebildet ist, und wobei die Wicklungen (L₁, L₂, L₃, L_{N}) auf den beiden Längsschenkeln des Kerns angeordnet sind,
wobei der Kern (6) zwei Luftspalte (7) aufweist und dadurch in zwei U-Förmige Teile aufgeteilt ist, von denen jeder mindestens eine der Wicklungen (L₁, L₂, L₃, L_{N}) enthält.

2. Drei-Phasen-Filtereinrichtung nach Anspruch 1, **dadurch gekennzeichnet, dass** die Wicklungen (L₁, L₂, L₃, L_{N}) schmall ausgebildet sind.

## Claims

1. Three-phase filter device for limiting the rate of increase of currents and voltages between the three phase lines and vis-à-vis the earth potential for frequency converters in the technology of machines or as network filters for electromagnetic compatibility, with an LC low pass having capacitances and inductances, wherein all inductances are combined into a common element (BE) that is built in such a way as to correspond functionally to the serial connection of a current compensated choke (L'), with a choke (L) arranged in every phase line and serving as series inductance,
wherein the common element (BE) contains a core (6) of magnetic material with a large air gap (7) and at least three multi-layered windings (L₁, L₂, L₃, L_{N}) fitted on this core,
wherein the windings are separated spatially and are arranged in such a way on the core that leakage flux result, which lead to leakage inductance, which in turn act as series inductance,
wherein a part (Ø) of the magnetic flux of each of said at least three windings flows through said core (6) and said air gap (7) and compensate each other, so that said element also acts as a current compensated choke,
wherein the windings' beginnings (A) and the exit clamps (B) of all windings (L₁, L₂, L₃, L_{N}) are each connected with the same type of connectors (3, N resp. 4, NE),
wherein the core (6) is made in a rectangular shape and wherein the windings (L₁, L₂, L₃, L_{N}) are arranged on both longer legs of the core,
wherein the core (6) has two air gaps (7) and is thus divided into two U-shaped parts, each of which contains at least one of the windings (L₁, L₂, L₃, L_{N}).

2. Three phase filter device according to claim 1, **characterized in that** the windings (L₁, L₂, L₃, L_{N}) are made narrow.

## Revendications

1. Dispositif de filtre triphasé pour limiter la vitesse de variation de courants et tensions entre les trois conducteurs de phase sous tension et vis-à-vis le potentiel de la terre, destiné aux convertisseurs de fréquence dans la technique des machines électriques ou comme filtres de réseaux pour la compatibilité électromagnétique, avec un filtre passe bas de type LC comprenant des capacités et des inductances, toutes les inductances étant combinées en un élément commun (BE) réalisé de telle sorte qu'il correspond fonctionnellement à la connexion sérielle d'une bobine à compensation de courant (L') avec une bobine (L) agissant comme inductance longitudinale disposée dans chaque conducteur de phase sous tension,l'élément commun (BE) contenant un noyau (6) en matériau magnétique avec un interstice important (7) et au moins trois bobinages multicouches (L₁, L₂, L₃, L_{N}) assemblés sur ce noyau,
les bobinages étant séparés spatialement et arrangés sur le noyau de telle sorte qu'il en résulte des flux de fuite conduisant à des inductances de fuite, qui à leur tour agissent comme inductances longitudinales,
une partie (Ø) des flux magnétiques de chacun desdits au moins trois bobinages passant au travers dudit noyau (6) et dudit espace (7) et se compensant mutuellement, en sorte que ledit élément agit également comme bobine à compensation de courant,
les extrémités d'entrée (A) des bobines et les bornes de sortie (B) de tous les bobinages (L₁, L₂, L₃, L_{N}) étant toutes connectées avec le même type de connecteurs (3, N resp. 4, NE),
le noyau (6) étant de forme rectangulaire et les bobinages (L₁, L₂, L₃, L_{N}) étant placés sur les deux jambes allongées de ce noyau,
le noyau (6) possèdant deux interstices (7) et étant ainsi divisé en deux parties en forme de U, chacune contenant au moins un des bobinages (L₁, L₂, L₃, L_{N}).

2. Filtre tri-phasé selon la revendication 1, **caractérisé en ce que** les bobinages (L₁, L₂, L₃, L_{N}) sont de forme étroite.
